# EUROPEAN PATENT APPLICATION

(11) **EP 4 737 616 A1**
(43) Date of publication of application: **06.05.2026**
(21) Application number: 23948200.3
(22) Date of filing: 12.09.2023
(51) Int. Cl.: C25B 13/08

(54) **COMPOSITE SEPARATOR, AND PREPARATION METHOD THEREFOR AND USE THEREOF**

(30) Priority: 07.08.2023 CN 202310987894
(71) Applicant: Xi'an Hydrogen Based Carbon Energy Technology Co., Ltd., Xi'an, Shaanxi 710018 (CN)
(72) Inventor: KANG, Peng, Xi'an Shaanxi 710018 (CN); NIU, Lijuan, Xi'an Shaanxi 710018 (CN); WANG, Xiuping, Xi'an Shaanxi 710018 (CN)
(74) Representative: De Vries & Metman
(86) International application number: PCT/CN2023/118357
(87) International publication number: WO 2025/030633

(57) **Abstract**

A composite separator and a preparation method therefor. The composite separator comprises a main film and an anti-contamination layer, which is arranged on one or both surfaces of the main film, wherein the anti-contamination layer comprises a first polymer a charge agent and/or an anti-fouling agent. The composite separator can be applied to alkaline water electrolysis for hydrogen production and other electrolysis industries, and the anti-contamination layer of the composite separator can effectively prevent impurity species, especially metal ions fallen from a cathode catalyst, from being attached to the surface, which causes the sheet resistance to increase, thereby increasing the electrolytic energy consumption.

## Description

### TECHNICAL FIELD

The present disclosure relates to the technical field of alkaline water electrolysis for hydrogen production, and specifically to a composite separator, a preparation method therefor, and a use thereof.

### BACKGROUND

In the current industrial hydrogen production, alkaline water electrolysis for hydrogen production has the advantages of high technical maturity and low equipment cost, and can be used for large-scale hydrogen production. As a key material of alkaline electrolyzers, the separator serves the dual functions of separating the gases generated in the positive electrode and negative electrode chambers and providing channels for ion migration across the separator in the electrolyte.

As a typical representative of current alkaline water electrolysis for hydrogen production separators, composite separators adopt oxide ceramic powders with hydrophilic properties. Meanwhile, the nanoporous structure can be regulated by controlling the film-forming process, both of which can effectively promote electrolyte diffusion. Compared with other hydrogen production separators, they have obvious advantages in gas barrier properties and reducing ion transport resistance, thus becoming a research hotspot. CN110869538A discloses an asymmetric composite separator. By changing the coagulation temperature and humidity conditions, asymmetric pores on both sides of the separator can be obtained to avoid "bubble trapping", prevent gas crossover, and ensure effective transport of OH⁻ ions. Similarly, the literature (Russian Journal of Applied Chemistry, 2016, 89, 618-621) also reports that adding polyvinylpyrrolidone to the casting solution can significantly improve the porosity and hydrophilicity of polysulfone membranes. Consequently, the current research focus is mainly on improving the hydrophilicity and gas barrier properties of separators, with considerable achievements. However, the contamination of separators by impurities is a common problem in the industry that urgently needs to be solved. Impurities can block membrane pores and cover the membrane surface, thereby greatly reducing electrolysis efficiency. These impurities often come from the shedding or corrosion of catalytic electrodes, the corrosion of system process pipelines and tanks, the introduction of impurities in electrolytes or water, and the like. They exist in the electrolyte in the form of particles or metal ions and are difficult to remove by traditional physical filtration methods. With the progress of electrolysis, they gradually accumulate on the membrane surface or in internal pores, increasing the ion migration resistance of the electrolyte, significantly increasing the voltage of the electrolytic cell, and affecting the service life of the separator.

Therefore, to solve the above problems encountered in the actual use of separators, it is necessary to develop an efficient electrolytic composite separator with resistance to impurity contamination. In view of this, the present disclosure is proposed.

### SUMMARY

The present disclosure provides an anti-fouling electrolytic composite separator and a preparation method therefor.

The present disclosure provides a composite separator, including a base membrane and an anti-fouling layer disposed on one or both surfaces of the base membrane, wherein the anti-fouling layer includes a first polymer, a charge agent, and/or an anti-fouling agent.

According to an embodiment of the present disclosure, the anti-fouling agent is one or more of graphene, graphene oxide, and MXene; the charge agent is one or more of aromatic polyamide, polypiperazine amide, polyamide, cellulose acetate, polyetherimide, polyimide, polyaniline, and chitosan.

According to another embodiment of the present disclosure, the thickness of the anti-fouling layer is 2-100 µm; preferably, the mass ratio of the first polymer, the charge agent, and the anti-fouling agent is (5-30):(0-40):(0-30).

According to another embodiment of the present disclosure, the first polymer is one or more of polyarylsulfone, polyethersulfone, polyphenylene sulfone, bisphenol A-type polysulfone, and polyetheretherketone.

According to another embodiment of the present disclosure, the base membrane includes a hydrophilic inorganic substance, a second polymer, and a pore-forming aid. The mass ratio of the second polymer to the hydrophilic inorganic substance is 1:1-1:8, and the mass ratio of the pore-forming aid to the second polymer is 1:10-2:1; preferably, the thickness of the base membrane is 100-700 µm.

According to another embodiment of the present disclosure, the second polymer is one or more of polyarylsulfone, polyethersulfone, polyphenylene sulfone, bisphenol A-type polysulfone, and polyetheretherketone; the pore-forming aid is one or more of polyvinylpyrrolidone, polyethylene oxide-polypropylene oxide-polyethylene oxide triblock copolymer, adduct of polypropylene glycol and ethylene oxide, polyethylene imine, and polyacrylonitrile; the hydrophilic inorganic substance is one or more of titanium dioxide, zirconium dioxide, cerium oxide, barium sulfate, calcium sulfate, barium titanate, and calcium titanate. Preferably, the particle size of the hydrophilic inorganic substance is 5 nm-3 µm.

According to another embodiment of the present disclosure, the base membrane further includes a support mesh or a support cloth. Preferably, the thickness of the support mesh or support cloth is 50-500 µm.

The present disclosure also provides a preparation method for the composite separator, including: S1, forming an anti-fouling layer slurry using a first liquid pore-forming agent, the first polymer, the charge agent, and/or the anti-fouling agent; S2, coating a surface of a substrate with a casting solution for forming the base membrane, coating the surface thereof with the anti-fouling layer slurry, pre-curing in the air, and then placing in a coagulation bath for curing until the liquid pore-forming agent precipitates to obtain the composite separator.

According to an embodiment of the present disclosure, the casting solution includes a second liquid pore-forming agent, and the addition amount of the second liquid pore-forming agent accounts for 30%-70% of the total mass of the casting solution; the addition amount of the first liquid pore-forming agent accounts for 30%-70% of the total mass of the anti-fouling layer slurry.

According to another embodiment of the present disclosure, in step S2, the pre-curing time in the air is 3-120 s, the temperature of the coagulation bath is 5-80 °C, the curing time in the coagulation bath is 10 min-2 h, and the solvent in the coagulation bath is deionized water or a mixed solvent of deionized water and one of dimethyl sulfoxide, 1-methyl-2-pyrrolidone, N,N-dimethylformamide, and N,N-dimethylacetamide.

The present disclosure also provides a use of the composite separator in electrolysis, preferably in alkaline water electrolysis for hydrogen production.

The composite separator of the present disclosure can be applied to alkaline water electrolysis for hydrogen production and other electrolysis industries. Its anti-fouling layer can effectively prevent impurity species, especially metal ions shed from cathode catalysts, from adhering to the surface, which causes an increase in area resistance and thus increases electrolytic energy consumption. The anti-fouling layer includes a charge agent and/or an anti-fouling agent. The positive charge of the charge agent forms an electrostatic repulsion with the positive charge of impurity metal ions, blocking them from covering or entering the separator and enhancing the anti-fouling effect of the anti-fouling layer; the anti-fouling agent in the anti-fouling layer can provide a low friction coefficient, which is conducive to flushing away impurities on the separator surface during electrolyte circulation to achieve self-cleaning. At the same time, the conductive layer has good charge transfer capability, effectively promoting electron and ion conduction, thereby improving electrolysis efficiency, service life, and stability of the separator, and facilitating the popularization and application of the composite separator in the electrolytic hydrogen production industry.

### BRIEF DESCRIPTION OF THE DRAWINGS

Figure 1 is a schematic flow chart of the preparation method for the composite separator of the present disclosure.
Figure 2 is a schematic cross-sectional view of the composite separator of the present disclosure.
Figure 3 is a scanning electron microscope (SEM) image of the surface of the composite separator prepared in Example 1.
Figure 4 is a SEM image of the cross-section of the composite separator prepared in Example 1.
Figure 5 is a SEM image of the surface of the composite separator prepared in Example 2.
Figure 6 is a SEM image of the cross-section of the composite separator prepared in Example 2.
Figure 7 is a contact angle test image of the composite separator prepared in Example 1.
Figure 8 is a contact angle test image of the composite separator prepared in Example 2.
Figure 9 is an electrolytic performance evaluation graph of Example 1.
Figure 10 is an electrolytic performance evaluation graph of Example 2.
Figure 11 is an electrolytic performance evaluation graph of Example 3.
Figure 12 is an electrolytic performance evaluation graph of Example 4.
Figure 13 is an electrolytic performance evaluation graph of Example 5.
Figure 14 is an electrolytic performance evaluation graph of Example 6.
Figure 15 is an electrolytic performance evaluation graph of Example 7.
Figure 16 is an electrolytic performance evaluation graph of Example 8.
Figure 17 is an electrolytic performance evaluation graph of Example 9.
Figure 18 is an electrolytic performance evaluation graph of Example 10.
Figure 19 is an electrolytic performance evaluation graph of Comparative Example 1.

### DETAILED DESCRIPTION

The present disclosure will be described in detail below with reference to specific embodiments.

The composite separator of the present disclosure includes a base membrane and an anti-fouling layer disposed on one or both surfaces of the base membrane, wherein the anti-fouling layer includes a first polymer, a charge agent, and/or an anti-fouling agent. The positive charge of the charge agent in the composite separator forms an electrostatic repulsion with the positive charge of impurity metal ions, blocking them from covering or entering the separator and enhancing the anti-fouling effect of the anti-fouling layer. The anti-fouling agent in the anti-fouling layer can provide a low friction coefficient, which is conducive to flushing away impurities on the separator surface during electrolyte circulation to achieve self-cleaning; at the same time, the conductive layer has good charge transfer capability, effectively promoting electron and ion conduction, thereby improving electrolysis efficiency, service life, and stability of the separator, and facilitating the popularization and application of the composite separator in the electrolytic hydrogen production industry.

In an optional embodiment, the anti-fouling agent in the anti-fouling layer can be one or more of graphene, graphene oxide, and MXene. The charge agent can be one or more of aromatic polyamide, polypiperazine amide, polyamide, cellulose acetate, polyetherimide, polyimide, polyaniline, and chitosan.

In an optional embodiment, the thickness of the anti-fouling layer is 2-100 µm. The thickness of the anti-fouling layer can be selected according to specific needs, such as 10 µm, 20 µm, 30 µm, 40 µm, 50 µm, 60 µm, 70 µm, 80 µm, 90 µm, 100 µm, and the like. The mass ratio of the first polymer, the charge agent, and the anti-fouling agent in the anti-fouling layer is (5-30):(0-40):(0-30).

In an optional embodiment, the base membrane layer includes a second polymer, a hydrophilic inorganic substance, and a pore-forming aid. The mass ratio of the second polymer to the hydrophilic inorganic substance is 1:1-1:8, and the mass ratio of the pore-forming aid to the second polymer is 1:10-2:1. The thickness of the base membrane layer can be 100-700 µm.

In an optional embodiment, the pore-forming aid can be one or more of polyvinylpyrrolidone (PVP), polyethylene oxide-polypropylene oxide-polyethylene oxide triblock copolymer, adduct of polypropylene glycol and ethylene oxide, polyethyleneimine, and polyacrylonitrile.

In an optional embodiment, the hydrophilic inorganic substance is one or more of titanium dioxide, zirconium dioxide, cerium oxide, barium sulfate, calcium sulfate, barium titanate, and calcium titanate. The particle size of the hydrophilic inorganic substance is 5 nm-3 µm.

In an optional embodiment, the base membrane may further include a support mesh or a support cloth to enhance the mechanical properties of the base membrane. The material of the support mesh or support cloth can be one or more of polyphenylene sulfide, polytetrafluoroethylene, polyethylene, polypropylene, nylon, polysulfone, and polyetheretherketone. The thickness of the support mesh or support cloth can be 50-500 µm.

In an optional embodiment, the first polymer in the anti-fouling layer and the second polymer in the base membrane can be the same or different. Each can be selected from one or more of polyarylsulfone, polyethersulfone, polyphenylene sulfone, bisphenol A-type polysulfone, and polyetheretherketone.

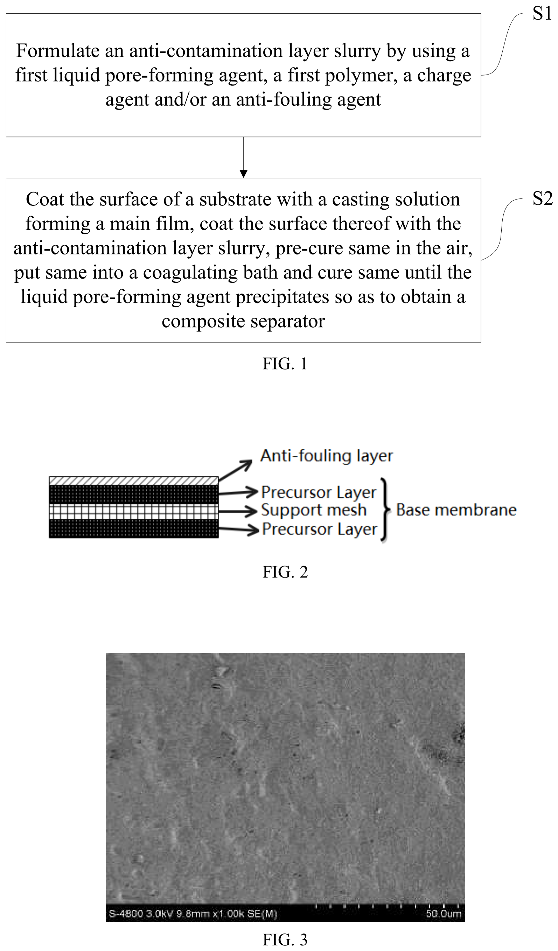

As shown in Figure 1, the composite separator of the present disclosure can be prepared by the following steps: S1, forming an anti-fouling layer slurry using a first liquid pore-forming agent, the first polymer, the charge agent, and/or the anti-fouling agent; S2, coating a surface of a substrate with a casting solution for forming the base membrane, coating the surface thereof with the anti-fouling layer slurry, pre-curing in the air, and then placing in a coagulation bath for curing until the liquid pore-forming agent precipitates to obtain the composite separator.

In an optional embodiment, the first liquid pore-forming agent, the first polymer, the charge agent, and/or the anti-fouling agent can be mixed to form the anti-fouling layer slurry. The order of adding the first polymer, the charge agent, and/or the anti-fouling agent can be arbitrary as long as a uniform slurry can be formed. For example, but not limited to, adding a certain mass of anti-fouling agent to the first liquid pore-forming agent, stirring to mix uniformly, and then adding a certain mass of polymer and charge agent. In the anti-fouling layer slurry, the first polymer accounts for 5%-30% of the total mass of the anti-fouling layer slurry; the first liquid pore-forming agent accounts for 30%-70% of the total mass of the anti-fouling layer slurry; the charge agent accounts for 0%-40% of the total mass of the anti-fouling layer slurry; the anti-fouling agent accounts for 0%-30% of the total mass of the anti-fouling layer slurry. The ultrasonic or stirring time can be 4-72 h.

In an optional embodiment, the second liquid pore-forming agent, hydrophilic inorganic powder, second polymer, and pore-forming aid can be mixed to form the casting solution. The order of adding the second liquid pore-forming agent, hydrophilic inorganic powder, second polymer, and pore-forming aid can be arbitrary as long as a uniform casting solution can be formed. For example, but not limited to, adding a certain mass of hydrophilic inorganic powder to the second liquid pore-forming agent, stirring to mix uniformly, and then adding a certain mass of polymer and pore-forming aid, stirring to obtain a uniform casting solution. The stirring and mixing time of the prepared casting solution is 4-72 h.

In an optional embodiment, the addition amount of the second liquid pore-forming agent in the casting solution accounts for 30%-70% of the total mass of the casting solution. The addition amount of the first liquid pore-forming agent in the anti-fouling layer slurry accounts for 30%-70% of the total mass of the anti-fouling layer slurry.

In an optional embodiment, the first liquid pore-forming agent and the second pore-forming agent can be the same or different. Each is selected from one or more of 1-methyl-2-pyrrolidone (NMP), dimethyl sulfoxide, N,N-dimethylformamide, N,N-dimethylacetamide, acetone, and tetrahydrofuran.

In step S2, the coating method can be any one of spraying, brushing, dipping, doctor blading, and roller coating.

In step S2, the pre-curing time in the air is 3-120 s, the temperature of the coagulation bath is 5-80 °C, and the curing time in the coagulation bath is 10 min-2 h. The solvent in the coagulation bath is deionized water or a mixed solvent of deionized water and one of dimethyl sulfoxide, 1-methyl-2-pyrrolidone, N,N-dimethylformamide, and N,N-dimethylacetamide.

The present disclosure is further described below through specific examples. However, these examples are only illustrative and do not constitute any limitation to the protection scope of the present disclosure.

In the following examples and comparative examples, the reagents, materials, and instruments used are commercially available unless otherwise specified.

### Example 1

83.25 g of N-methyl-2-pyrrolidone (NMP) was weighed, and 48.5 g of ZrO₂ powder (average particle size: 100 nm) was added to it. The mixture was placed in a stirrer and stirred uniformly. Subsequently, 11.1 g of polysulfone (PSF) solid and 1.6 g of polyvinylpyrrolidone (PVP) were added, with stirring continued until a uniform casting solution was obtained. Separately, 4 g of polyaniline was dispersed in 5 g of NMP, followed by the addition of 1 g of PSF. This mixture was then subjected to ultrasonic stirring in an ultrasonic bath at 25 °C for 6 h to prepare a uniform anti-fouling layer slurry. The casting solution was then symmetrically coated onto both sides of a polyphenylene sulfide (PPS) support mesh with a thickness of 200 µm to form liquid films, resulting in a base membrane with a thickness of 300 µm. Subsequently, the prepared anti-fouling layer slurry was sprayed onto one side to a thickness of 20 µm. After pre-curing in air for 30 s, the assembly was immersed in deionized water at 25 °C to remove the pore-forming agent, yielding the composite separator with the structure depicted in Figure 2.

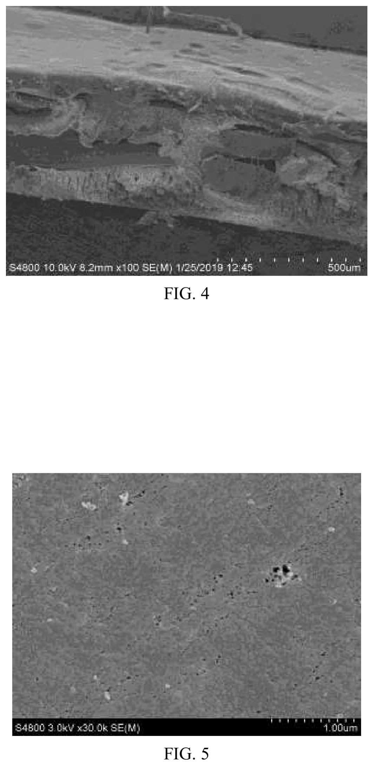

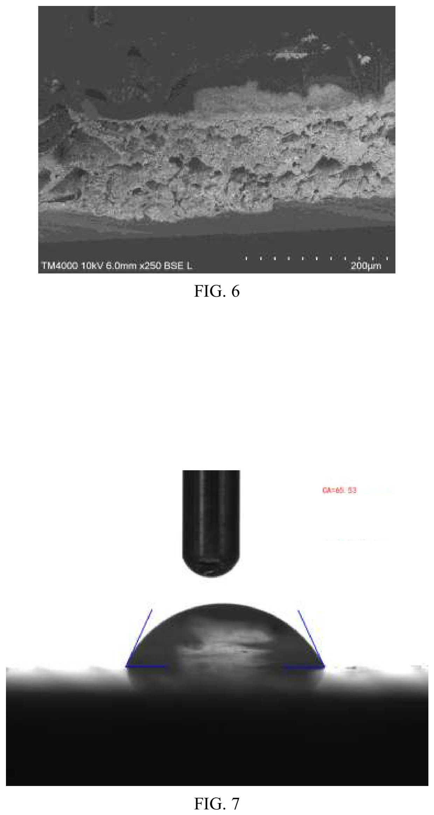

The obtained composite separator was subjected to scanning electron microscope (SEM) test to observe its surface morphology. As shown in Figure 3, the surface was relatively dense and flat, with no obvious large pore structure, only nanopores. Figure 4 is a cross-sectional view of the separator, and the interior of the separator has a large pore structure to provide channels for ion transport. Moreover, the anti-fouling layer and the base membrane have good compositing. Figure 7 shows a contact angle test photo with a contact angle of 65.53°, indicating that the surface of the composite separator has good wettability with water and can effectively block the adsorption and penetration of gas in water electrolysis for hydrogen production. The test data such as area resistance, tensile strength, peel strength, and bubble point of the composite separator are shown in Table 1. The composite separators sprayed with the anti-fouling layer all showed good gas barrier properties and strong peel strength, indicating that the addition of the anti-fouling layer makes the entire green body of the composite separator have strong adhesion to the base PPS support mesh, the stability is well improved, the area resistance is low, the surface pore size of the separator is small, and the bubble point pressure is greater than 2 Bar, showing good gas barrier performance.

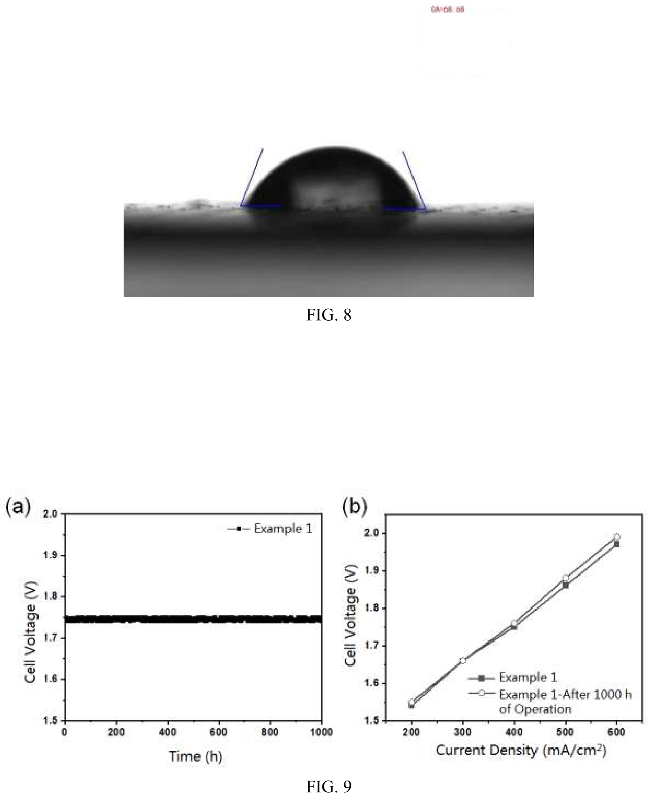

The composite separator was installed in an electrolyzer for water electrolysis hydrogen production to conduct electrolytic performance test. The cathode of the electrolyzer adopted a commercial Raney nickel electrode, the anode was a nickel mesh, the current collector was a nickel plate, and 30 wt% KOH was used as the electrolyte. 0.01 M FeCl₃ and 0.01 M NiCl₂ soluble impurities were added to the cathode electrolyte to simulate metal ions caused by catalyst shedding. The geometric area of the working electrode was 25 cm², the temperature of the electrolyte and the electrolyzer was kept constant at 85 °C, the current of the electrolyzer was controlled in the range of 5-15 A, and the change of cell voltage was measured. The I-V relationship graph of electrolytic performance evaluation is shown in Figure 9b. Then, the long-term test of anti-fouling performance of the prepared composite separator under constant current was carried out. As shown in Figure 9a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 9a). Moreover, the area resistance after operation was almost unchanged (Table 1). At the same time, the I-V relationship of the separator tested after 1000 h of operation was not much different from that before (Figure 9b), indicating that the anti-fouling layer can effectively prevent the contamination of the separator surface by impurity metal ions.

### Example 2

83.25 g of NMP was weighed, and 48.5 g of ZrO₂ powder (average particle size: 100 nm) was added to it. The mixture was placed in a stirrer and stirred uniformly. Subsequently, 11.1 g of polyethersulfone solid and 1.6 g of PVP were added, with stirring continued until a uniform casting solution was obtained. Separately, 3 g of graphene was dispersed in 6 g of NMP, followed by the addition of 1 g of PSF. This mixture was then subjected to ultrasonic stirring in an ultrasonic bath at 20 °C for 6 h to prepare a uniform anti-fouling layer slurry. The casting solution was then symmetrically coated onto both sides of a PPS support mesh with a thickness of 200 µm to form liquid films, resulting in a base membrane with a thickness of 300 µm. Subsequently, the prepared anti-fouling layer slurry was sprayed onto one side to a thickness of 40 µm. After pre-curing in air for 30 s, the assembly was immersed in deionized water at 25 °C to remove the pore-forming agent, yielding the composite separator.

The obtained composite separator was subjected to SEM test to observe its surface morphology. Figure 5 is its surface structure, Figure 6 is a cross-sectional view of the separator, and Figure 8 is a contact angle test photo of the separator with a contact angle of 68.68°.

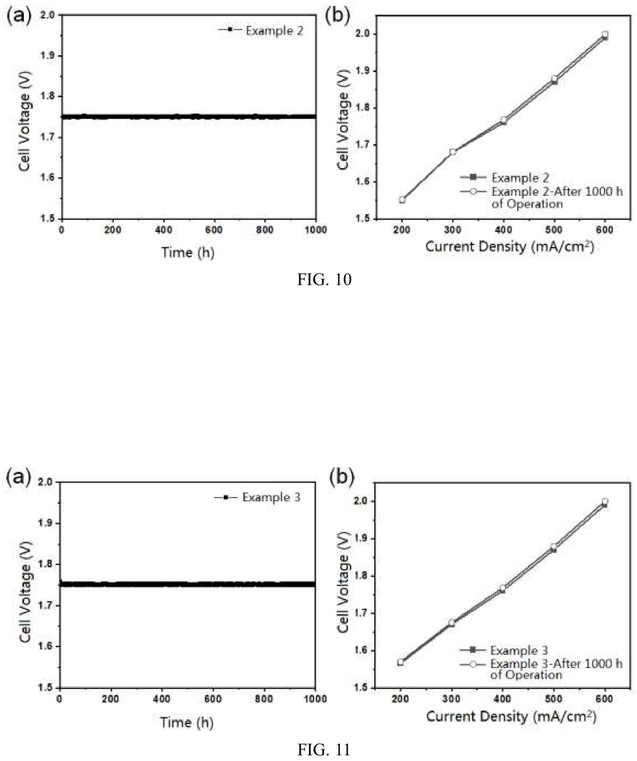

The composite separator was installed in an electrolyzer for water electrolysis hydrogen production to conduct electrolytic performance test. The test conditions were consistent with Example 1, and the I-V relationship graph of electrolytic performance evaluation is shown in Figure 10b. Then, the long-term test of anti-fouling performance of the prepared composite separator under constant current was carried out. As shown in Figure 10a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 10a). Moreover, the area resistance after operation was almost unchanged (Table 1). At the same time, the I-V relationship of the separator tested after 1000 h of operation was not much different from that before (Figure 10b), indicating that the anti-fouling layer can effectively prevent the contamination of the separator surface by impurity metal ions.

### Example 3

83.25 g of NMP was weighed, and 48.5 g of ZrO₂ powder (average particle size: 100 nm) was added to it. The mixture was placed in a stirrer and stirred uniformly. Subsequently, 11.1 g of PSF solid and 1.6 g of F123 were added, with stirring continued until a uniform casting solution was obtained. Separately, 1 g of polyetherimide and 1 g of graphene oxide were dispersed in 7 g of NMP, followed by the addition of 1 g of PSF. This mixture was then subjected to ultrasonic stirring in an ultrasonic bath at 20 °C for 6 h to prepare a uniform anti-fouling layer slurry. The casting solution was then symmetrically coated onto both sides of a PPS support mesh with a thickness of 200 µm to form liquid films, resulting in a base membrane with a thickness of 300 µm. Subsequently, the prepared anti-fouling layer slurry was sprayed onto one side to a thickness of 60 µm. After pre-curing in air for 40 s, the assembly was immersed in deionized water at 25 °C to remove the pore-forming agent, yielding the composite separator.

The composite separator was installed in an electrolyzer for water electrolysis hydrogen production to conduct electrolytic performance test. The test conditions were consistent with Example 1, and the I-V relationship graph of electrolytic performance evaluation is shown in Figure 11b. Then, the long-term test of anti-fouling performance of the prepared composite separator under constant current was carried out. As shown in Figure 11a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 11a). Moreover, the area resistance after operation was almost unchanged (Table 1). At the same time, the I-V relationship of the separator tested after 1000 h of operation was not much different from that before (Figure 11b), indicating that the anti-fouling layer can effectively prevent the contamination of the separator surface by impurity metal ions.

### Example 4

83.25 g of NMP was weighed, and 48.5 g of ZrO₂ powder (average particle size: 100 nm) was added to it. The mixture was placed in a stirrer and stirred uniformly. Subsequently, 11.1 g of polyethersulfone solid and 1.6 g of F123 were added, with stirring continued until a uniform casting solution was obtained. Separately, 2 g of polyetherimide and 3 g of MXene were dispersed in 4.5 g of NMP, followed by the addition of 0.5 g of polyarylsulfone. This mixture was then subjected to ultrasonic stirring in an ultrasonic bath at 25 °C for 6 h to prepare a uniform anti-fouling layer slurry. The casting solution was then symmetrically coated onto both sides of a PPS support mesh with a thickness of 300 µm to form liquid films, resulting in a base membrane with a thickness of 500 µm. Subsequently, the prepared anti-fouling layer slurry was sprayed onto one side to a thickness of 80 µm. After pre-curing in air for 30 s, the assembly was immersed in deionized water at 25 °C to remove the pore-forming agent, yielding the composite separator.

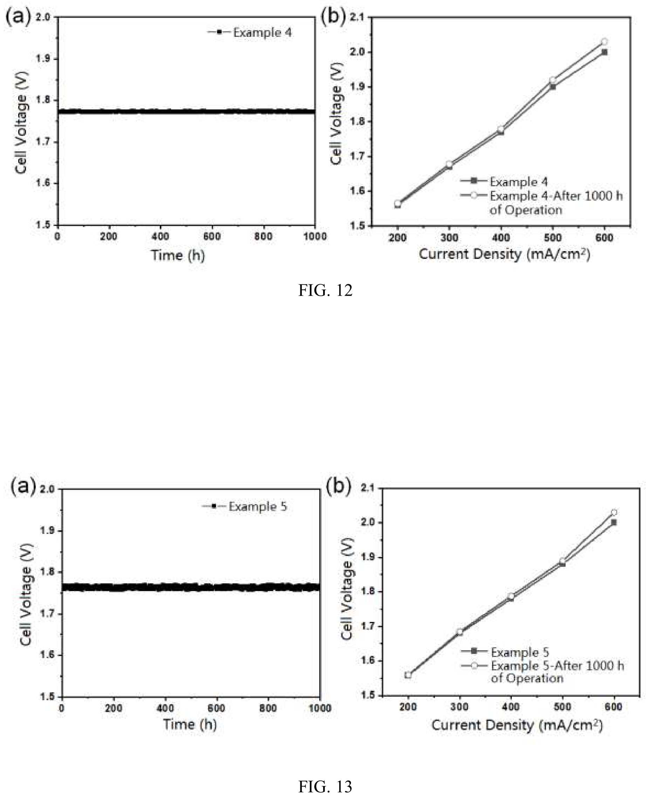

The composite separator was installed in an electrolyzer for water electrolysis hydrogen production to conduct electrolytic performance test. The test conditions were consistent with Example 1, and the I-V relationship graph of electrolytic performance evaluation is shown in Figure 12b. Then, the long-term test of anti-fouling performance of the prepared composite separator under constant current was carried out. As shown in Figure 12a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 12a). Moreover, the area resistance after operation was almost unchanged (Table 1). At the same time, the I-V relationship of the separator tested after 1000 h of operation was not much different from that before (Figure 12b), indicating that the anti-fouling layer can effectively prevent the contamination of the separator surface by impurity metal ions.

### Example 5

83.25 g of NMP was weighed, and 48.5 g of ZrO₂ powder (average particle size: 100 nm) was added to it. The mixture was placed in a stirrer and stirred uniformly. Subsequently, 11.1 g of polyarylsulfone solid and 1.6 g of PVP were added, with stirring continued until a uniform casting solution was obtained. Separately, 3.2 g of polyaniline and 3 g of molybdenum disulfide were dispersed in 3 g of NMP, followed by the addition of 0.8 g of polyarylsulfone. This mixture was then subjected to ultrasonic stirring in an ultrasonic bath at 25 °C for 6 h to prepare a uniform anti-fouling layer slurry. The casting solution was then symmetrically coated onto both sides of a PPS support mesh with a thickness of 300 µm to form liquid films, resulting in a base membrane with a thickness of 500 µm. Subsequently, the prepared anti-fouling layer slurry was sprayed onto one side to a thickness of 40 µm. After pre-curing in air for 30 s, the assembly was immersed in deionized water at 25 °C to remove the pore-forming agent, yielding the composite separator.

The composite separator was installed in an electrolyzer for water electrolysis hydrogen production to conduct electrolytic performance test. The test conditions were consistent with Example 1, and the I-V relationship graph of electrolytic performance evaluation is shown in Figure 13b. Then, the long-term test of anti-fouling performance of the prepared composite separator under constant current was carried out. As shown in Figure 13a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 13a). Moreover, the area resistance after operation was almost unchanged (Table 1). At the same time, the I-V relationship of the separator tested after 1000 h of operation was not much different from that before (Figure 13b), indicating that the anti-fouling layer can effectively prevent the contamination of the separator surface by impurity metal ions.

### Example 6

83.25 g of NMP was weighed, and 48.5 g of ZrO₂ powder (average particle size: 100 nm) was added to it. The mixture was placed in a stirrer and stirred uniformly. Subsequently, 11.1 g of PSF solid and 1.6 g of PVP were added, with stirring continued until a uniform casting solution was obtained. Separately, 2 g of chitosan and 2 g of graphene were dispersed in 4.4 g of NMP, followed by the addition of 1.6 g of PSF. This mixture was then subjected to ultrasonic stirring in an ultrasonic bath at 25 °C for 3 h to prepare a uniform anti-fouling layer slurry. The casting solution was then symmetrically coated onto both sides of a PPS support mesh with a thickness of 300 µm to form liquid films, resulting in a base membrane with a thickness of 400 µm. Subsequently, the prepared anti-fouling layer slurry was sprayed onto one side to a thickness of 100 µm. After pre-curing in air for 30 s, the assembly was immersed in deionized water at 25 °C to remove the pore-forming agent, yielding the composite separator.

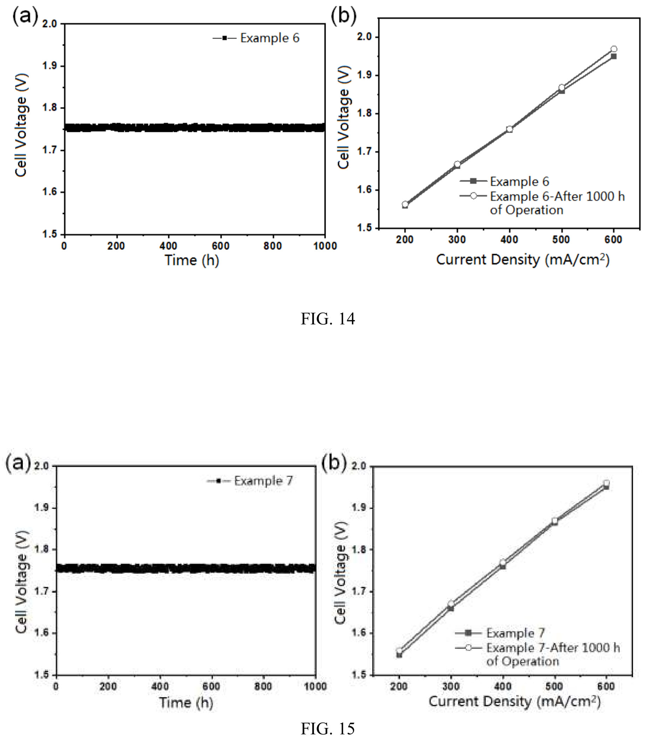

The composite separator was installed in an electrolyzer for water electrolysis hydrogen production to conduct electrolytic performance test. The test conditions were consistent with Example 1, and the I-V relationship graph of electrolytic performance evaluation is shown in Figure 14b. Then, the long-term test of anti-fouling performance of the prepared composite separator under constant current was carried out. As shown in Figure 14a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 14a). Moreover, the area resistance after operation was almost unchanged (Table 1). At the same time, the I-V relationship of the separator tested after 1000 h of operation was not much different from that before (Figure 14b), indicating that the anti-fouling layer can effectively prevent the contamination of the separator surface by impurity metal ions.

### Example 7

83.25 g of NMP was weighed, and 48.5 g of ZrO₂ powder (average particle size: 100 nm) was added to it. The mixture was placed in a stirrer and stirred uniformly. Subsequently, 11.1 g of PSF solid and 1.6 g of PVP were added, with stirring continued until a uniform casting solution was obtained. Separately, 1.5 g of polypiperazine amide and 1.5 g of graphene were dispersed in 4 g of NMP, followed by the addition of 3 g of PSF. This mixture was then subjected to ultrasonic stirring in an ultrasonic bath at 20 °C for 3 h to prepare a uniform anti-fouling layer slurry. The casting solution was then symmetrically coated onto both sides of a PPS support mesh with a thickness of 300 µm to form liquid films, resulting in a base membrane with a thickness of 400 µm. Subsequently, the prepared anti-fouling layer slurry was sprayed onto one side to a thickness of 60 µm. After pre-curing in air for 30 s, the assembly was immersed in deionized water at 25 °C to remove the pore-forming agent, yielding the composite separator.

The composite separator was installed in an electrolyzer for water electrolysis hydrogen production to conduct electrolytic performance test. The test conditions were consistent with Example 1, and the I-V relationship graph of electrolytic performance evaluation is shown in Figure 15b. Then, the long-term test of anti-fouling performance of the prepared composite separator under constant current was carried out. As shown in Figure 15a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 15a). Moreover, the area resistance after operation was almost unchanged (Table 1). At the same time, the I-V relationship of the separator tested after 1000 h of operation was not much different from that before (Figure 15b), indicating that the anti-fouling layer can effectively prevent the contamination of the separator surface by impurity metal ions.

### Example 8

67.2 g of NMP was weighed, and 40 g of ZrO₂ powder (average particle size: 100 nm) was added to it. The mixture was placed in a stirrer and stirred uniformly. Subsequently, 7 g of PSF solid and 1.6 g of PVP were added, with stirring continued until a uniform casting solution was obtained. Separately, 3.5 g of polyimide was dispersed in 6 g of NMP, followed by the addition of 0.5 g of PSF. This mixture was then subjected to ultrasonic stirring in an ultrasonic bath at 20 °C for 3 h to prepare a uniform anti-fouling layer slurry. The casting solution was then symmetrically coated onto both sides of a PPS support mesh with a thickness of 300 µm to form liquid films, resulting in a base membrane with a thickness of 400 µm. Subsequently, the prepared anti-fouling layer slurry was sprayed onto one side to a thickness of 20 µm. After pre-curing in air for 40 s, the assembly was immersed in deionized water at 25 °C to remove the pore-forming agent, yielding the composite separator.

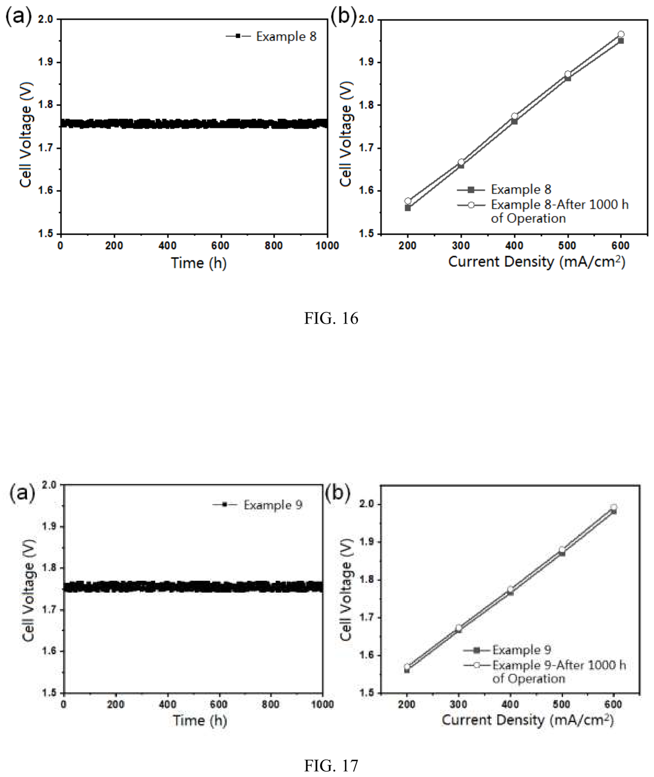

The composite separator was installed in an electrolyzer for water electrolysis hydrogen production to conduct electrolytic performance test. The test conditions were consistent with Example 1, and the I-V relationship graph of electrolytic performance evaluation is shown in Figure 16b. Then, the long-term test of anti-fouling performance of the prepared composite separator under constant current was carried out. As shown in Figure 16a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 16a). Moreover, the area resistance after operation was almost unchanged (Table 1). At the same time, the I-V relationship of the separator tested after 1000 h of operation was not much different from that before (Figure 16b), indicating that the anti-fouling layer can effectively prevent the contamination of the separator surface by impurity metal ions.

### Example 9

83.25 g of NMP was weighed, and 48.5 g of ZrO₂ powder (average particle size: 100 nm) was added to it. The mixture was placed in a stirrer and stirred uniformly. Subsequently, 11.1 g of PSF solid and 5.56 g of PVP were added, with stirring continued until a uniform casting solution was obtained. Separately, 2.5 g of MXene was dispersed in 7 g of NMP, followed by the addition of 0.5 g of PSF. This mixture was then subjected to ultrasonic stirring in an ultrasonic bath at 25 °C for 6 h to prepare a uniform anti-fouling layer slurry. The casting solution was then symmetrically coated onto both sides of a PPS support mesh with a thickness of 300 µm to form liquid films, resulting in a base membrane with a thickness of 400 µm. Subsequently, the prepared anti-fouling layer slurry was sprayed onto one side to a thickness of 40 µm. After pre-curing in air for 30 s, the assembly was immersed in deionized water at 25 °C to remove the pore-forming agent, yielding the composite separator.

The composite separator was installed in an electrolyzer for water electrolysis hydrogen production to conduct electrolytic performance test. The test conditions were consistent with Example 1, and the I-V relationship graph of electrolytic performance evaluation is shown in Figure 17b. Then, the long-term test of anti-fouling performance of the prepared composite separator under constant current was carried out. As shown in Figure 17a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 17a). Moreover, the area resistance after operation was almost unchanged (Table 1). At the same time, the I-V relationship of the separator tested after 1000 h of operation was not much different from that before (Figure 17b), indicating that the anti-fouling layer can effectively prevent the contamination of the separator surface by impurity metal ions.

### Example 10

83.25 g of NMP was weighed, and 48.5 g of ZrO₂ powder (average particle size: 100 nm) was added to it. The mixture was placed in a stirrer and stirred uniformly. Subsequently, 11.1 g of PSF solid and 1.6 g of PVP were added, with stirring continued until a uniform casting solution was obtained. Separately, 1.5 g of graphene and 2 g of polyisophthaloyl metaphenylene diamine fiber were dispersed in 6 g of NMP, followed by the addition of 0.5 g of PSF. This mixture was then subjected to ultrasonic stirring in an ultrasonic bath at 25 °C for 3 h to prepare a uniform anti-fouling layer slurry. The casting solution was then symmetrically coated onto both sides of a PPS support mesh with a thickness of 300 µm to form liquid films, resulting in a base membrane with a thickness of 400 µm. Subsequently, the prepared anti-fouling layer slurry was sprayed onto one side to a thickness of 60 µm. After pre-curing in air for 30 s, the assembly was immersed in deionized water at 25 °C to remove the pore-forming agent, yielding the composite separator.

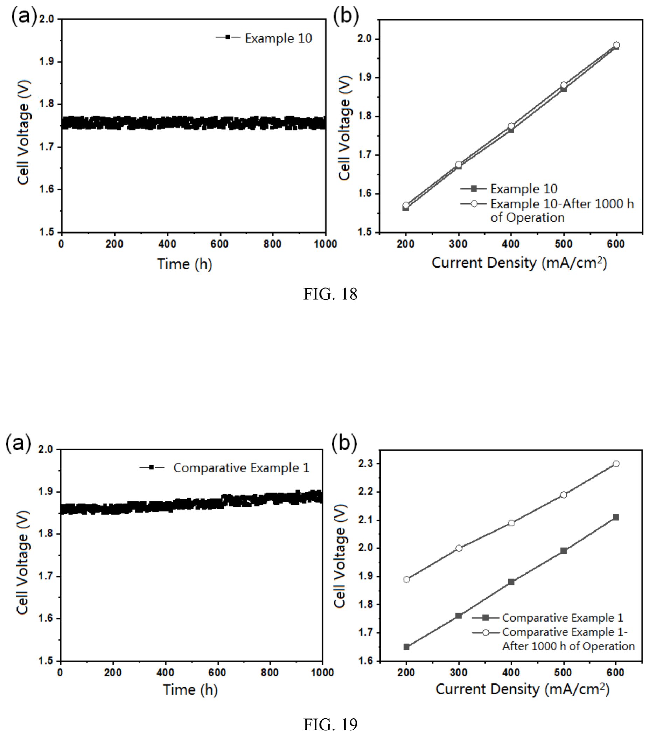

The composite separator was installed in an electrolyzer for water electrolysis hydrogen production to conduct electrolytic performance test. The test conditions were consistent with Example 1, and the I-V relationship graph of electrolytic performance evaluation is shown in Figure 18b. Then, the long-term test of anti-fouling performance of the prepared composite separator under constant current was carried out. As shown in Figure 18a, it is the curve of cell voltage change with time. The test conditions were consistent with the above I-V performance test, and the current density was kept constant at 400 mA/cm². It can be found that the metal impurity ions in the cathode electrolyte had no effect on the cell voltage, and the operation was relatively stable (Figure 18a). Moreover, the area resistance after operation was almost unchanged (Table 1). At the same time, the I-V relationship of the separator tested after 1000 h of operation was not much different from that before (Figure 18b), indicating that the anti-fouling layer can effectively prevent the contamination of the separator surface by impurity metal ions.

### Comparative Example 1

83.25 g of NMP was weighed, and 48.5 g of ZrO₂ powder (average particle size: 100 nm) was added to it. The mixture was placed in a stirrer and stirred uniformly. Subsequently, 11.1 g of PSF solid and 1.6 g of PVP were added, with stirring continued until a uniform casting solution was obtained. The casting solution was then symmetrically coated onto both sides of a PPS support mesh with a thickness of 300 µm to form liquid films. The coated mesh was pre-cured in air for 30 s, then immersed in a coagulation bath containing deionized water at 25 °C for complete curing, during which the pore-forming agent was removed, yielding the final composite separator.

The composite separator was installed in an electrolyzer for water electrolysis hydrogen production to conduct electrolytic performance test. The test conditions were consistent with Example 1, and the I-V relationship graph of electrolytic performance evaluation is shown in Figure 19b. The long-term test of anti-fouling performance of the prepared composite separator under constant current was carried out. As shown in Figure 19a, it is the curve of cell voltage change with time. The test conditions were consistent with the above I-V performance test, and 0.01 M FeCl₃ and 0.01 M NiCl₂ soluble impurities were added to the cathode electrolyte to simulate metal ions caused by catalyst shedding. It can be found that in Comparative Example 1, under a current density of 400 mA/cm², the metal impurity ions in the cathode electrolyte had a significant effect on the cell voltage (Figure 19a), and the area resistance after operation also increased (Table 1). At the same time, the I-V relationship of the separator tested after 1000 h of operation (Figure 19b) showed that the metal impurity ions had a significant impact on the electrical performance of the separator, increasing the electrolyzer voltage and greatly increasing the electrolytic energy consumption.

Table 1 shows the test results of the composite separators prepared in Examples 1-10 and Comparative Example 1. The area resistance was tested on an electrochemical workstation in accordance with the standard SJT10171.5-1991; the tensile strength and peel strength were tested by a universal testing machine in accordance with the standard GBT3923.1; the average surface pore size and bubble point pressure were tested by a bubble point pore size analyzer in accordance with the standard GB/T32361-2015.

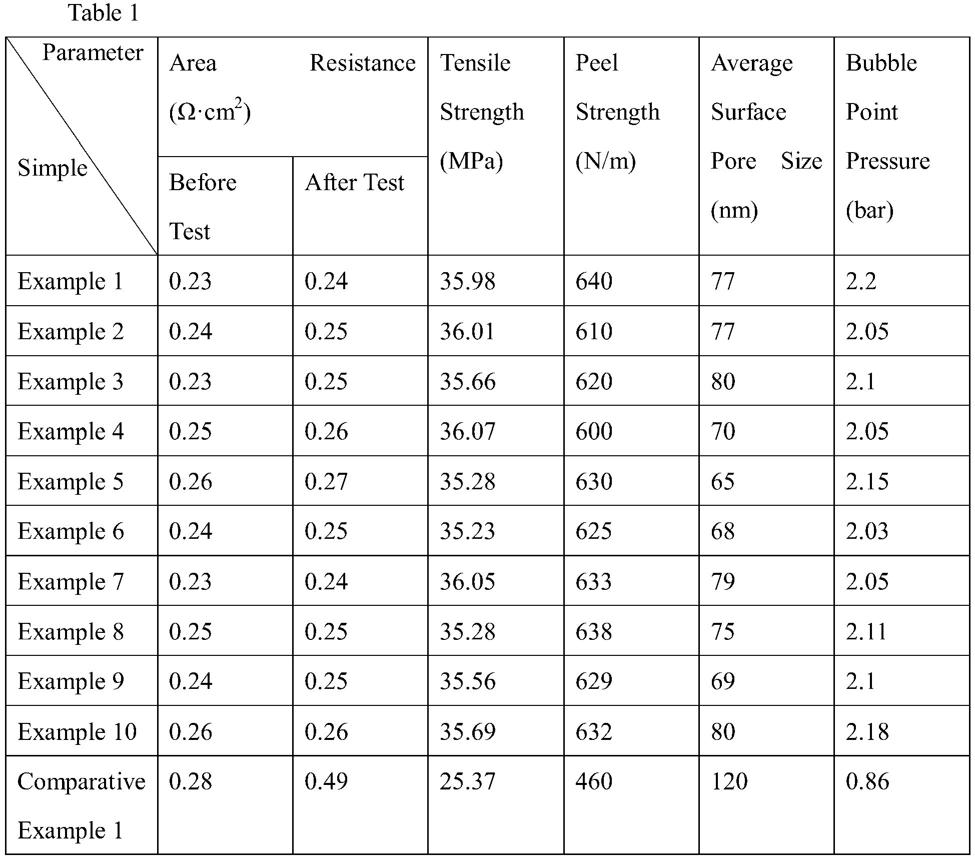

The preferred embodiments of the present disclosure disclosed above are only used to help explain the present disclosure. The preferred embodiments do not describe all details in detail, nor limit the disclosure to only the described specific implementations. Obviously, many modifications and changes can be made according to the content of this specification. This specification selects and specifically describes these embodiments to better explain the principles and practical applications of the present disclosure, so that those skilled in the art can well understand and use the present disclosure. The present disclosure is only limited by the claims and their full scope and equivalents.

## Claims

1. A composite separator, comprising a base membrane and an anti-fouling layer disposed on one or both surfaces of the base membrane, wherein the anti-fouling layer comprises a first polymer, a charge agent, and/or an anti-fouling agent.

2. The composite separator according to claim 1, wherein the anti-fouling agent is one or more of graphene, graphene oxide, and MXene; the charge agent is one or more of aromatic polyamide, polypiperazine amide, polyamide, cellulose acetate, polyimide, polyetherimide, polyaniline, and chitosan.

3. The composite separator according to claim 1, wherein a thickness of the anti-fouling layer is 2-100 µm; preferably, a mass ratio of the first polymer, the charge agent, and the anti-fouling agent is (5-30):(0-40):(0-30).

4. The composite separator according to claim 1, wherein the first polymer is one or more of polyarylsulfone, polyethersulfone, polyphenylene sulfone, bisphenol A-type polysulfone, and polyetheretherketone.

5. The composite separator according to claim 1, wherein the base membrane comprises a hydrophilic inorganic substance, a second polymer, and a pore-forming aid, a mass ratio of the second polymer to the hydrophilic inorganic substance is 1:1-1:8, and a mass ratio of the pore-forming aid to the second polymer is 1:10-2:1; preferably, a thickness of the base membrane is 100-700 µm.

6. The composite separator according to claim 5, wherein the second polymer is one or more of polyarylsulfone, polyethersulfone, polyphenylene sulfone, bisphenol A-type polysulfone, and polyetheretherketone; the pore-forming aid is one or more of polyvinylpyrrolidone, polyethylene oxide-polypropylene oxide-polyethylene oxide triblock copolymer, adduct of polypropylene glycol and ethylene oxide, polyethyleneimine, and polyacrylonitrile; the hydrophilic inorganic substance is one or more of titanium dioxide, zirconium dioxide, cerium oxide, barium sulfate, calcium sulfate, barium titanate, and calcium titanate, preferably, a particle size of the hydrophilic inorganic substance is 5 nm-3 µm.

7. The composite separator according to claim 1, wherein the base membrane further comprises a support mesh or a support cloth, preferably, a thickness of the support mesh or support cloth is 50-500 µm.

8. A preparation method for the composite separator according to any one of claims 1-7, comprising:
S1, forming an anti-fouling layer slurry using a first liquid pore-forming agent, the first polymer, the charge agent, and/or the anti-fouling agent;
S2, coating the surface of a substrate with a casting solution for forming the base membrane, coating the surface thereof with the anti-fouling layer slurry, pre-curing in the air, and then placing in a coagulation bath for curing until the liquid pore-forming agent precipitates to obtain the composite separator.

9. The preparation method according to claim 8, wherein the casting solution comprises a second liquid pore-forming agent, and an addition amount of the second liquid pore-forming agent accounts for 30%-70% of a total mass of the casting solution; an addition amount of the first liquid pore-forming agent accounts for 30%-70% of a total mass of the anti-fouling layer slurry; preferably, in step S2, a pre-curing time in the air is 3-120 s, a temperature of the coagulation bath is 5-80 °C, a curing time in the coagulation bath is 10 min-2 h, and a solvent in the coagulation bath is deionized water or a mixed solvent of deionized water and one of dimethyl sulfoxide, 1-methyl-2-pyrrolidone, N,N-dimethylformamide, and N,N-dimethylacetamide.

10. A use of the composite separator according to any one of claims 1-7 in electrolysis, preferably in alkaline water electrolysis for hydrogen production.
